# FASCICULE DE BREVET EUROPEEN

(11) **EP 2 221 755 B1**
(45) Date de publication et mention de la délivrance du brevet: **25.05.2016**
(21) Numéro de dépôt: 10152986.5
(22) Date de dépôt: 09.02.2010
(51) Int. Cl.: G06K 19/077

(54) **Carte à puce à circuit de mesure à capteur, et procédé de réalisation de la carte à puce**
Chip-Karte mit einem Sensor, und Verfahren zur Herstellung der Chip-Karte
Chip card comprising a sensor and method for manufacturing such a chip card

(30) Priorité: 10.02.2009 EP 09152487
(43) Date de publication de la demande: 25.08.2010
(73) Titulaire: EM Microelectronic-Marin SA, 2074 Marin (CH)
(72) Inventeur: Quercia, Victorio, 1586, Vallamand (CH); Willemin, Michel, 2515, Prêles (CH)
(74) Mandataire: Ravenel, Thierry Gérard Louis

(56) Documents cités:
- DE-U1- 29 717 395

## Description

L'invention concerne une carte à puce destinée à être insérée dans un instrument électronique portable. La carte à puce est munie d'un circuit de mesure à capteur. La carte à puce peut être une carte SIM, qui comprend au moins un circuit intégré muni d'une unité mémoire, dans laquelle peuvent être mémorisées des données personnelles et/ou au moins un code d'identification de la carte à puce et/ou des paramètres de configuration, et un circuit de mesure à capteur. Le circuit intégré et le circuit de mesure à capteur sont encapsulés dans un matériau isolant formant ladite carte. La carte à puce comprend aussi des moyens de liaison pour communiquer avec un instrument électronique dans lequel ladite carte à puce peut par exemple être placée. Ces moyens de liaison sont électriquement reliés à des plages correspondantes de contact du circuit intégré.

L'invention concerne également un système électronique à carte à puce munie d'un circuit de mesure à capteur.

Il faut entendre par moyens de liaison essentiellement tout moyen pour communiquer notamment des données et/ou des commandes avec un instrument électronique. Ces moyens de liaison peuvent être par exemple une zone de contacts électriques accessibles sur au moins une face de la carte à puce. Les contacts électriques de ladite zone de contacts sont destinés à venir en contact de bornes de contact complémentaires d'un instrument électronique dans lequel peut être placée ladite carte à puce.

La carte à puce peut être par exemple une carte SIM ou une carte mémoire ou une carte de crédit dans un format permettant leur placement dans un instrument électronique, qui peut être par exemple un téléphone portable (cellulaire). Dans le cas d'un instrument de télécommunication comme un téléphone portable, cette carte à puce peut être de préférence une carte SIM, qui est adaptée pour pouvoir être insérée dans un logement prévu à cet effet à l'intérieur dudit téléphone et connectée à des bornes de contact du téléphone. Dans un réseau cellulaire du type GSM, l'utilisation d'une telle carte à puce dans l'instrument électronique, notamment dans le téléphone portable, permet d'assurer l'identification d'un utilisateur par l'intermédiaire d'un opérateur du système de télécommunication. Cette carte à puce permet aussi d'assurer la compatibilité et l'interchangeabilité des téléphones portables au sein de ce système de télécommunication.

Ces cartes à puce permettent à l'utilisateur d'accéder au système de télécommunication mobile via un fournisseur ou opérateur de réseau approprié. Elles comprennent donc des données, qui définissent les modalités d'accès au système de télécommunication mobile et permettent en outre la mémorisation de données complémentaires relatives à l'utilisateur. Ces données complémentaires concernent par exemple un numéro d'identification personnel et/ou éventuellement un répertoire de numéros d'appels téléphoniques.

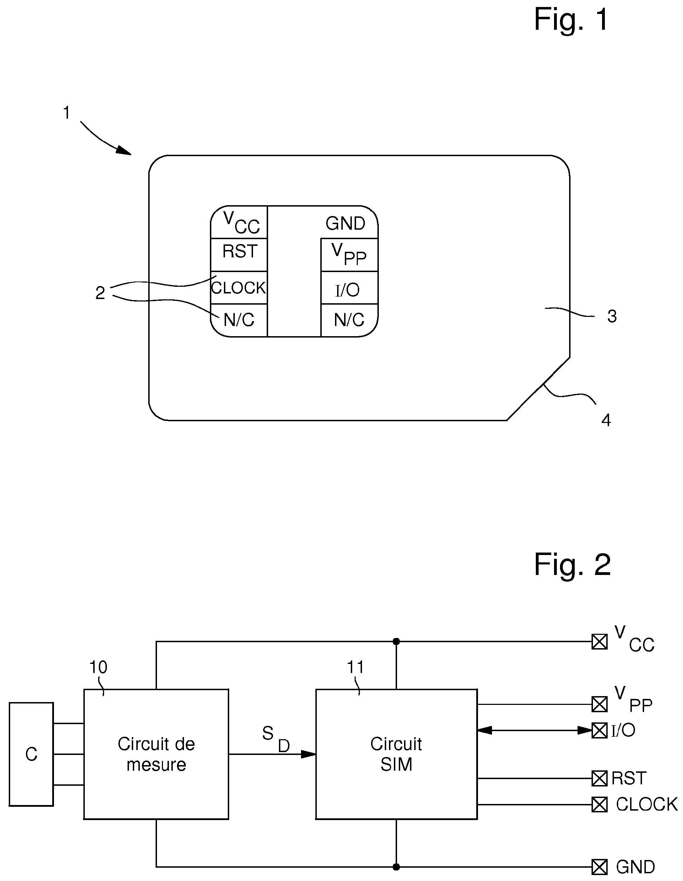

Chaque carte à puce du type SIM (Subscriber Identity Module) présente des dimensions et caractéristiques physiques qui sont définies par des standards internationaux, tels que notamment les standards ISO/IEC 7810, 7816-1 et 7816-2. Une telle carte à puce se présente ainsi sous la forme d'une carte en matière plastique dans laquelle est logée au moins un circuit intégré. Il existe deux formats standard d'une telle carte à puce pour équiper un instrument électronique portable. Le premier format est comparable à celui d'une carte de crédit (85.60 mm x 53.98 mm x 0.80 mm). Le deuxième format présente des dimensions plus petites de l'ordre de 25 mm x 15 mm x 0.80 mm, comme l'exemple illustré à la figure 1 et décrit dans la description suivante.

Il est également connu d'équiper une telle carte à puce du type SIM de moyens électroniques, telles qu'un dispositif RFID pour la communication bidirectionnelle de données au moyen d'une antenne du dispositif RFID, qui est logée dans la carte à puce. A ce titre, on peut citer le document de brevet US 2007/0281549, qui fait mention de cette fonction RFID en liaison au circuit intégré de ladite carte à puce. Cependant un tel dispositif RFID n'a que des fonctions similaires à celles liées à la téléphonie.

Une telle carte à puce peut également comprendre d'autres composants électroniques intégrés dans le matériau isolant de ladite carte à puce. Ces composants électroniques peuvent être des circuits de mesure à capteur tels que des circuits pour mesurer une température en liaison au circuit intégré de ladite carte à puce. Cependant aucune précaution n'est prise spécifiquement pour intégrer ces composants électroniques traditionnels avec le circuit intégré dans le matériau plastique de la carte.

Il est également connu du document de brevet DE 297 17 395 U1 d'intégrer un module électronique muni d'un circuit de mesure à capteur dans une carte à puce format carte de crédit dans le but d'assurer un contrôle pour le transport de marchandises, mais également aucune précaution particulière n'est spécifiée dans le but d'intégrer sans dommage un circuit de mesure à capteur de mouvement.

Des capteurs de mouvement peuvent également être utilisés dans des téléphones portables comme décrit dans les documents de brevet US 2008/0014989 et WO 2004/082248. Ces capteurs de mouvement peuvent servir à commander certains fonctions préprogrammées par l'utilisateur dans le téléphone, mais ils ne sont pas prévus pour être directement intégrés dans une carte à puce.

L'invention a donc pour but de fournir une carte à puce qui comprend un circuit de mesure à capteur pour pallier notamment aux inconvénients susmentionnés, et permettant de ne pas nuire à la fonctionnalité du circuit de mesure intégré dans la carte.

A cet effet, l'invention concerne une carte à puce citée ci-devant, qui comprend les caractéristiques telles que définies dans la revendication indépendante 1.

Des formes d'exécution particulières de la carte à puce sont définies dans les revendications dépendantes 2 à 10.

Un avantage de la carte à puce, telle qu'une carte SIM, est qu'elle permet une fois insérée et connectée dans un instrument portable, tel qu'un téléphone portable, de fournir des signaux de données et/ou de commandes sur la base d'au moins une mesure effectuée par le circuit de mesure à capteur, qui comprend spécialement un capteur de mouvement.

Avantageusement le circuit de mesure, qui comprend le capteur de mouvement et une interface capteur, est monté dans un boîtier rigide pour définir un module électronique. Ceci permet d'assurer une meilleure isolation mécanique pour le capteur, qui peut être un capteur d'accélération du type MEMS. Ceci facilite le montage du module électronique à circuit de mesure dans la carte à puce sans contrainte par le matériau plastique notamment sur le capteur du circuit de mesure.

Avec un tel capteur de mouvement, tel qu'un capteur d'accélération ou de choc, une commande peut être fournie directement à l'instrument électronique portable ou par l'intermédiaire du circuit intégré de ladite carte. Cette commande relative au mouvement détecté peut permettre à l'instrument de reconnaître des actions ou fonctions à effectuer préprogrammées par l'utilisateur. Par exemple, il peut être envisagé d'exécuter une fonction spécifique dans l'instrument par une seule accélération ou secousse ou impulsion imposée à la carte à puce ou plusieurs secousses ou impulsions successives imposées à la carte à puce.

Avantageusement, il peut encore être envisagé avec un tel circuit de mesure à capteur de mouvement de fournir un signal numérique de sortie de mesure, qui peut être mémorisé dans un registre dédicacé de l'unité mémoire du circuit intégré. Ce signal de sortie peut permettre de commander l'instrument portable pour une reconnaissance de modèles, de menus, de mouvements du porteur de l'instrument, de chocs subis par l'instrument, ou pour tracer des dessins. Pour ce faire, le circuit de mesure à capteur peut être un accéléromètre ou podomètre utilisant une mesure d'une variation capacitive de condensateurs montés en différentiel d'un capteur capacitif. Cet accéléromètre peut être également un accéléromètre triaxial, qui permet de fournir des commandes à l'instrument portable, par exemple pour actionner à distance un engin mécanique, tel qu'un robot ou un véhicule.

Un avantage de la carte à puce montée dans l'instrument portable est que dans le cas où le capteur de mouvement est un accéléromètre, la mesure d'accélération permet de fournir une commande à l'instrument portable pour le passage par exemple d'un mode basse consommation ou stand-by à un mode de fonctionnement normal.

Dans le cas où la carte à puce est une carte SIM ou une carte mémoire, tous les paramètres liés au circuit de mesure, notamment des paramètres de configuration, peuvent être mémorisés. Ces paramètres de configuration peuvent être propres à l'utilisateur de ladite carte à puce. Ceci permet de changer d'instrument portable, tel que le téléphone portable, dans lequel est placée ladite carte à puce, tout en gardant mémorisés tous ces paramètres, et sans devoir à chaque fois opérer la configuration escomptée en cas de changement d'instrument. Ces paramètres peuvent être mémorisés dans une mémoire prévue directement dans le circuit de mesure ou dans l'unité mémoire du circuit intégré.

La carte à puce peut avantageusement comprendre ses propres moyens d'alimentation électrique. Ces moyens d'alimentation électrique peuvent comprendre une cellule solaire ou un accumulateur d'énergie ou un dispositif RFID pour capter des signaux radiofréquences.

A cet effet, l'invention concerne également un système électronique à carte à puce à circuit de mesure à capteur, qui comprend les caractéristiques telles que définies dans la revendication indépendante 11.

Les buts, avantages et caractéristiques du système électronique avec la carte à puce, apparaîtront mieux dans la description suivante de manière non limitative d'au moins une forme d'exécution illustrée par les dessins sur lesquels :
la figure 1 représente une vue de dessus d'une carte à puce sous la forme d'une carte SIM selon l'invention pour un téléphone portable,
la figure 2 représente de manière simplifiée les composants électroniques de la carte à puce selon l'invention, et
les figures 3a et 3b représente de manière simplifiée une vue de dessus et une vue de côté du circuit intégré et du circuit de mesure montés dans une partie de la carte à puce selon l'invention.

Dans la description suivante, toutes les parties de la carte à puce, qui sont bien connues d'un homme du métier dans ce domaine technique, ne sont relatées que de manière simplifiée.

La figure 1 représente une carte à puce ou carte intelligente (SMART card) sous la forme d'une carte SIM traditionnelle 1. Les caractéristiques principales de cette carte SIM 1, qui peut être utilisée dans un téléphone portable selon la présente invention sont ainsi sommairement décrites.

Cette carte SIM 1 se présente sous la forme d'un élément plat essentiellement rectangulaire possédant des dimensions par exemple de l'ordre de 15 mm x 25 mm, et d'épaisseur proche de 0.76 mm. Cette carte SIM 1 comporte en particulier un bord oblique 4 servant de détrompeur pour une bonne orientation de cette dernière, lorsqu'elle est insérée dans un logement prévu à cet effet dans le téléphone.

La carte SIM 1 comprend également des moyens de liaison 2 pour communiquer notamment des données et/ou des commandes avec un instrument électronique, tel qu'un téléphone portable dans lequel est placée ladite carte SIM. Ces moyens de liaison peuvent être de préférence une zone de contacts électriques accessibles 2, qui sont disposés sur au moins une face de ladite carte à puce. Les contacts électriques 2 sont représentés en nombre égal à huit, mais uniquement six de ces contacts sont généralement utilisés. Ces contacts électriques 2 sont reliés de manière traditionnelle à des plages de contact correspondantes d'un circuit intégré non représenté. Ce circuit intégré est ainsi enfermé dans le matériau opaque isolant 3 formant ladite carte à puce.

La zone de contacts électriques 2 est arrangée sur une face de la carte à puce selon des standards internationaux comme indiqués ci-devant. Une fois la carte à puce insérée dans le logement prévu d'un téléphone portable, les contacts électriques de la zone de contacts 2 sont connectés à des bornes de contact complémentaires prévues dans une position bien définie dans le téléphone. Une alimentation électrique peut être fournie par le téléphone à la carte par deux contacts électriques V_{CC} et GND de la zone de contacts 2. Il peut également être prévu un contact électrique RST pour recevoir éventuellement un signal de Reset, un contact électrique V_{PP} pour recevoir un signal de tension de programmation de l'unité mémoire, un contact électrique CLOCK pour recevoir ou fournir un signal d'horloge et un contact électrique I/O pour la réception ou le transfert de données ou de commandes.

Comme représenté schématiquement à la figure 2, ledit circuit intégré 11 pour une carte du type SIM comprend généralement une unité mémoire, non représentée, qui est reliée à une unité à microprocesseur, non représentée, pour le traitement de données ou commandes reçues ou transmises. L'unité mémoire peut comprendre une mémoire non volatile du type Flash ou EEPROM pour mémoriser des données personnelles, au moins un code d'identification de la carte à puce et des paramètres de configuration. L'unité mémoire contient également notamment des données définissant les modalités d'accès au système de télécommunication mobile.

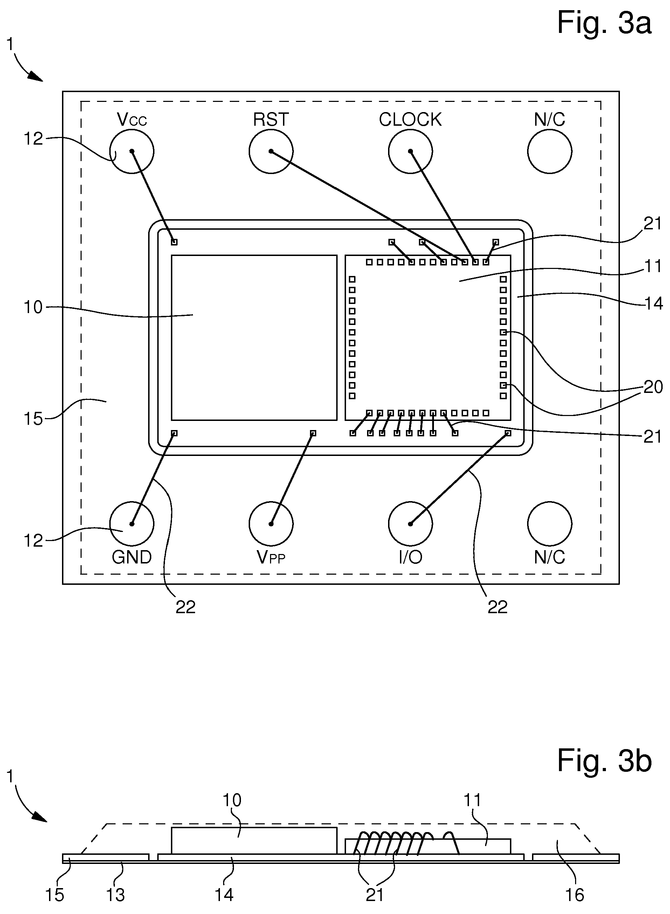

La carte à puce selon l'invention comprend encore un circuit de mesure 10 à capteur C. Comme expliqué ci-après en référence aux figures 3a et 3b, le circuit de mesure 10 à capteur C est logé dans un boîtier rigide pour former un module électronique. Le circuit de mesure comprend donc une interface capteur 10 et un capteur de mouvement C du type MEMS, qui sont reliés sur une grille de connexion notamment en Cuivre à l'intérieur du boîtier rigide, qui peut être un boîtier du type MLF en plastique. Un espace suffisant est prévu à l'intérieur du boîtier pour le capteur de mouvement et l'interface capteur du circuit de mesure pour éviter toute contrainte du matériau d'encapsulation, qui enferme ledit module électronique 10. Le capteur de mouvement peut ainsi détecter sans problème un choc ou mesurer une accélération. Ce module électronique à circuit de mesure, qui est de préférence un accéléromètre à un seul axe ou triaxial, ou un podomètre, est enfermé également dans le matériau opaque isolant formant ladite carte à puce.

Il peut être envisagé d'utiliser un accéléromètre, qui comprend deux condensateurs montés en différentiel pour former un capteur capacitif dont la variation capacitive est mesurée par une interface capteur du circuit de mesure. L'interface capteur du circuit de mesure peut être réalisée par exemple sur la base d'une interface électronique telle que décrite notamment dans l'article rédigé par MM. H. Leuthold et F. Rudolph, qui est paru dans la revue intitulée "Sensors and actuators" A21-A23 (1990), pages 278 à 281. Un accéléromètre piézo-résistif peut aussi être utilisé.

Cette interface capteur fournit un signal de mesure du paramètre physique (accélération) à des moyens de prétraitement du signal de mesure pour qu'ils fournissent un signal numérique de sortie S_{D} relatif à la mesure du paramètre. Ce signal de sortie peut être directement ou par l'intermédiaire du circuit intégré SIM 11, exploitable pour la commande d'une action ou d'une fonction d'un instrument portable, tel qu'un téléphone portable. Ceci permet d'opérer une commande rapide dans le téléphone.

Dans le cas de préférence d'un capteur de mouvement, pour la mesure d'une accélération ou d'un choc, une commande peut être fournie directement à l'instrument électronique portable ou par l'intermédiaire du circuit intégré de ladite carte. Cette commande relative au mouvement détecté peut permettre à l'instrument de reconnaître des actions ou fonctions à effectuer préprogrammées par l'utilisateur. Il peut être envisagé d'exécuter une fonction spécifique dans l'instrument par une seule secousse ou impulsion imposée à la carte à puce ou plusieurs impulsions successives imposées à la carte à puce dans un laps de temps défini.

Ce signal numérique de sortie S_{D} peut être mémorisé dans une mémoire du circuit de mesure ou de préférence dans un registre dédicacé de l'unité mémoire du circuit intégré SIM 11. La lecture de ce signal numérique mémorisé reste flexible dans le temps en fonction de l'utilisateur. Cette lecture dudit signal de sortie mémorisé peut être requise ainsi à tout moment. Cette unité mémoire peut également mémoriser des paramètres de configuration du circuit de mesure, notamment propres à un utilisateur de la carte à puce, et/ou différents signaux de sortie successifs du circuit de mesure. De cette manière, plusieurs données ou configurations personnelles sont mémorisées dans la mémoire du circuit de mesure 10 ou dans l'unité mémoire du circuit SIM 11. La carte à puce peut ainsi être placée dans n'importe quel autre instrument portable, c'est-à-dire dans n'importe quel autre téléphone portable sans devoir exécuter à nouveau toutes les opérations de programmation ou mémorisation de données ou commandes personnelles.

Le circuit de mesure à capteur peut comprendre à la suite de l'interface capteur, comme moyens de prétraitement encore une unité de traitement des signaux analogiques, un convertisseur analogique-numérique, une unité de commande et de traitement des signaux numériques, un oscillateur et un régulateur de tension régulée pour alimenter à une tension régulée les composants électroniques du circuit de mesure. Tous ces composants du circuit de mesure sont intégrés dans le module électronique. Le signal numérique de sortie S_{D} peut ainsi être fourni par l'unité de commande et de traitement de manière à pouvoir être mémorisé dans un registre dédicacé dans l'unité mémoire du circuit SIM. Un tel agencement de composants électroniques du circuit de mesure est notamment décrit dans la demande de brevet suisse CH 01431/07 du même Demandeur.

Dans une forme d'exécution de la carte à puce, le circuit de mesure sans le capteur de mouvement est réalisé dans un second circuit intégré avec tous les composants électroniques indiqués ci-dessus. Ce second circuit intégré et le capteur de mouvement sont montés à l'intérieur du boîtier du module électronique, et reliés électriquement à des bornes de connexion externes du module électronique afin de pouvoir être reliés électriquement au premier circuit intégré de la carte à puce. Le premier circuit intégré et le module électronique peuvent être placés côte à côté dans le matériau isolant de la carte à puce. Le capteur MEMS, qui est relié électriquement à l'interface capteur du circuit de mesure, peut être monté sur le second circuit intégré ou placé dans un même plan que ce second circuit intégré dans le boîtier du module électronique.

Il peut encore être envisagé que la carte à puce comprenne encore de propres moyens d'alimentation électrique (mode stand-alone). Ces moyens d'alimentation électrique peuvent être constitués par une cellule solaire ou un accumulateur d'énergie électrique ou un dispositif RFID. Il peut être aussi prévu de monter plusieurs circuits intégrés dans la même carte à puce ou plusieurs circuits de mesure à capteur pour mesurer d'autres paramètres physiques, tels que la pression et/ou la température.

Aux figures 3a et 3b, il est représenté de manière simplifiée le circuit intégré SIM 11 et le module électronique 10 à circuit de mesure montés dans une partie de la carte à puce 1 selon l'invention.

Le module électronique 10 comme expliqué ci-dessus comprend dans un boîtier du type MLF classique notamment en plastique, un circuit de mesure à capteur de mouvement, qui est monté sur une grille de connexion en Cuivre. Le circuit de mesure est composé d'une interface capteur et du capteur de mouvement, qui définissent par exemple un accéléromètre à un seul axe ou triaxial, ou un podomètre. L'interface capteur fait partie d'un second circuit intégré dans lequel sont intégrés également des moyens de prétraitement du signal de mesure pour qu'ils fournissent un signal numérique de sortie S_{D} relatif à la mesure du paramètre. Ces moyens de prétraitement du signal de mesure comprennent une unité de traitement des signaux analogiques, un convertisseur analogique-numérique, une unité de commande et de traitement des signaux numériques, un oscillateur et un régulateur de tension régulée. Le circuit de mesure est relié électriquement à travers une paroi du boîtier du module, à des bornes de connexion externes non représentées, qui sont disposées sur une face extérieure du boîtier du module.

Le module électronique 10 est monté tout comme le premier circuit intégré SIM 11 sur une première face d'une plaque à circuit imprimé 14. Cette plaque à circuit imprimé peut être faite en FR4, en céramique ou en Silicium. Les bornes de connexion du module peuvent être connectées directement sur des plages de connexion prévues à cet effet sur la première face de la plaque 14. Pour ce faire, il peut être utilisé soit une technique dénommée "flip chip" en terminologie anglaise, soit une technique de brasage. Toutefois, il peut aussi être prévu de relier électriquement les bornes de connexion du module électronique sur la plaque à circuit imprimé au moyen de fils métalliques de connexion 21 sur des plages de connexion accessibles sur ladite plaque à circuit imprimé 14. Le circuit intégré SIM 11 comprend un ensemble de plages de contact 20, dont certaines sont reliées électriquement sur des plages de connexion de la plaque à circuit imprimé 14 par des fils métalliques 21. Ces fils métalliques peuvent être des fils en Or ou un Aluminium ou en Cuivre.

L'ensemble comprenant la plaque à circuit imprimé 14 sur laquelle sont montés le module électronique 10 et le circuit intégré SIM 11, est monté sur une première face d'un substrat de connexion 13, qui peut être un film flexible utilisé généralement dans des cartes à puce du type SIM. Ce film flexible peut être réalisé avec une résine époxy chargée de fibres de verre et portant des pistes conductrices métalliques faites en Or, en Cuivre et en Nickel.

Un cadre de connexion 15 entoure l'ensemble monté sur le substrat de connexion 13. Le cadre de connexion 15 fixé sur le substrat flexible 13 définit une alvéole pour le montage de l'ensemble, qui comprend la plaque à circuit imprimé 14 avec le module 10 et le circuit intégré 11. Il est prévu sur une première face de ce cadre de connexion 15, des plages de connexion 12 reliées à travers le cadre de connexion à des contacts électriques de la zone de contacts électriques accessibles de l'extérieur de la carte pour une connexion dans un instrument électronique. La zone de contacts électriques non représentée est disposée sur une seconde face du substrat de connexion 13 opposée à la première face de montage de l'ensemble.

Ces plages de connexion 12 du cadre de connexion sont au nombre de 8 pour être reliées à deux contacts électriques V_{CC} et GND de la zone de contacts, à un contact électrique RST pour recevoir un signal de Reset, à un contact électrique V_{PP} pour recevoir un signal de tension de programmation de l'unité mémoire, à un contact électrique CLOCK pour recevoir ou fournir un signal d'horloge et à un contact électrique I/O pour la réception ou le transfert de données ou de commandes. Excepté deux plages de connexion représentées par N/C, les plages de connexion 12 sont reliées par des fils métalliques 22 soit sur des plages de connexion de la plaque à circuit imprimé 14 ou directement sur des plages de contact 20 du circuit intégré SIM 11 comme représenté.

Pour une production industrielle, il est avantageux d'opérer déjà le montage du module électronique 10 et du circuit intégré SIM 11 sur la plaque à circuit imprimé 14. Ensuite de quoi cet ensemble est monté sur le substrat flexible 13 et une connexion électrique de cet ensemble avec les plages de connexion 12 du cadre de connexion 15 est opérée pour être compatible avec une production en grande série. Une fois que tous les composants électroniques sont montés et que leurs connexions électriques sont effectuées, tous ces éléments sont enfermés ou encapsulés d'une manière traditionnelle dans un matériau isolant 16 formant ladite carte à puce 1 d'épaisseur de l'ordre de 0.7 mm par exemple.

A partir de la description qui vient d'être faite, plusieurs variantes de réalisation de la carte à puce peuvent être conçues par l'homme du métier sans sortir du cadre de l'invention définie par les revendications. Dans le cas d'une carte à puce sous la forme d'une carte mémoire, la zone de contacts électriques peut se trouver sur un bord de ladite carte tout en ayant une partie des contacts électriques situés sur au moins une face principale de la carte. Les moyens de liaison de ladite carte à puce peuvent être également un dispositif de liaison sans fil, tel qu'un dispositif RFID ou un dispositif d'émission/réception de lumière. A l'intérieur du matériau opaque enfermant le ou les circuits intégrés, il peut être prévu un logement pour le capteur en fonction du type de paramètre physique à mesurer. Il aurait pu être prévu de réaliser le circuit de mesure dans le circuit intégré du circuit SIM, logé dans le module électronique, avec le capteur MEMS relié à l'interface capteur du circuit de mesure. Le capteur MEMS peut être monté sur le circuit intégré, qui comprend le circuit de mesure et le circuit SIM. Il peut être prévu également un capteur de température et/ou de pression dans la carte à puce fonctionnant alternativement avec le circuit de mesure à capteur de mouvement.

## Revendications

1. Carte à puce (1) du type SIM destinée à être insérée dans un instrument électronique portable sous forme de téléphone, ladite carte à puce comprenant au moins un circuit intégré (11) muni d'une unité mémoire, dans laquelle peuvent être mémorisées des données personnelles et/ou au moins un code d'identification de la carte à puce et/ou des paramètres de configuration, ledit circuit intégré étant enfermé dans un matériau isolant (3) formant ladite carte, la carte (1) comprenant également des moyens de liaison (2) pour communiquer avec-l'instrument électronique, lesdits moyens de liaison étant électriquement reliés à des plages correspondantes de contact du circuit intégré, la carte à puce comprenant en outre un circuit de mesure à capteur pour la mesure d'un paramètre physique afin de pouvoir fournir au moins un signal de sortie relatif à la mesure (S_{D}) du paramètre physique, ledit circuit de mesure à capteur étant disposé dans un boîtier rigide pour définir un module électronique (10), qui est enfermé dans le matériau isolant (3) formant ladite carte à puce, le circuit de mesure comprenant un capteur de mouvement (C) logé dans un espace suffisant à l'intérieur du boîtier pour lui permettre de détecter un choc ou pour mesurer une accélération, et une interface capteur reliée au capteur pour fournir un signal de mesure du paramètre physique, le circuit de mesure étant électriquement relié à travers le boîtier du module à des bornes de connexion externe sur le boîtier, et le module électronique étant relié électriquement par ses bornes de connexion externe au circuit intégré de la carte à puce, le module électronique et le circuit intégré étant placés côte à côte dans le matériau isolant de la carte à puce sur une première face d'une plaque à circuit imprimé (14),
la carte à puce (1) étant adaptée pour fournir une commande directement à l'instrument électronique portable sur la base du signal de mesure de l'interface capteur, ou par l'intermédiaire du circuit intégré de ladite carte, cette commande relative au mouvement détecté permettant à l'instrument électronique portable de reconnaître au moins une action ou fonction à effectuer préprogrammée par l'utilisateur, ceci permettant d'opérer une commande rapide dans l'instrument électronique portable.

2. Carte à puce (1) du type SIM selon la revendication 1,
**caractérisé en ce que** le circuit de mesure dans le boîtier du module de la carte à puce (1) comprend également des moyens de prétraitement du signal de mesure fourni par l'interface capteur de manière que les moyens de prétraitement fournissent un signal de sortie (S_{D}) relatif à la mesure du paramètre et exploitable pour la commande d'une action ou d'une fonction de l'instrument électronique.

3. Carte à puce (1) du type SIM selon la revendication 1,
**caractérisé en ce que** les moyens de liaison de la carte à puce (1) comprennent un dispositif de liaison sans fil et/ou une zone de contacts électriques (2) accessibles sur au moins une face de la carte destinés à venir en contact de bornes de contact complémentaires de l'instrument électronique dans lequel peut être placée ladite carte à puce, lesdits contacts électriques étant électriquement reliés à des plages correspondantes de contact du circuit intégré, et **en ce que** le circuit de mesure à capteur (10) pour la mesure d'un paramètre physique peut fournir au moins un signal de sortie relatif à la mesure (S_{D}) du paramètre physique par une connexion électrique à travers le boîtier du module électronique et par l'intermédiaire du dispositif de liaison sans fil et/ou par un des contacts électriques (I/O) de la zone de contacts (2).

4. Carte à puce (1) du type SIM selon la revendication 1,
**caractérisé en ce que** le circuit de mesure à capteur de la carte à puce (1) est un accéléromètre triaxial, qui comprend un élément micro électromécanique, relié électriquement à une interface capteur du circuit de mesure.

5. Carte à puce (1) du type SIM selon la revendication 1,
**caractérisé en ce que** le boîtier du module électronique de la carte à puce (1) comprend intérieurement un espace suffisant pour le capteur de mouvement et l'interface capteur du circuit de mesure (10) afin de lui permettre de détecter un choc ou mesurer une accélération.

6. Carte à puce (1) du type SIM selon la revendication 1,
**caractérisé en ce que** l'interface capteur du circuit de mesure de la carte à puce (1) est prévue sur la base d'une seule ou plusieurs accélérations ou secousses successives de ladite carte à puce dans un laps de temps défini, pour fournir un signal pour commander l'exécution d'une action ou fonction préprogrammée dans l'instrument électronique.

7. Carte à puce (1) du type SIM selon la revendication 1,
**caractérisé en ce qu'**au moins un registre dédicacé dans l'unité mémoire du circuit intégré de la carte à puce (1) est prévu pour mémoriser le signal de sortie (S_{D}) relatif à la mesure du paramètre du circuit de mesure et fourni au circuit intégré à travers le boîtier du module électronique.

8. Carte à puce (1) du type SIM selon l'une des revendications précédentes, **caractérisé en ce que** le circuit de mesure sans le capteur est réalisé dans un autre circuit intégré et relié au capteur de mouvement dans le boîtier du module électronique.

9. Carte à puce (1) du type SIM selon la revendication 8,
**caractérisé en ce qu'**une seconde face de la plaque à circuit imprimé (14) de la carte à puce (1) est montée sur une face intérieure d'un substrat de connexion (13), **en ce qu'**un cadre de connexion (15) est fixé sur la face intérieure du substrat de connexion et entoure la plaque à circuit imprimé (14), et **en ce que** la face extérieure du substrat de connexion porte une zone de contacts électriques (2) accessibles pour venir en contact de bornes de contact complémentaires de l'instrument électronique dans lequel peut être placée ladite carte à puce, la zone de contacts étant reliée électriquement au premier circuit intégré et au module électronique.

10. Carte à puce (1) du type SIM selon l'une des revendications précédentes, **caractérisé en ce que** la carte à puce (1) comprend des moyens d'alimentation électrique des composants de la carte à puce, telles qu'une cellule solaire ou un accumulateur d'énergie électrique ou un dispositif RFID pour capter des signaux radiofréquences.

11. Système électronique comportant une carte à puce (1) du type SIM selon l'une des revendications précédentes insérée dans un instrument électronique portable sous forme de téléphone.

## Patentansprüche

1. Chipkarte (1) des SIM-Typs, die dazu bestimmt ist, in ein tragbares elektronisches Gerät in Form eines Telefons eingesetzt zu werden, wobei die Chipkarte wenigstens eine integrierte Schaltung (11) umfasst, die mit einer Speichereinheit versehen ist, in der persönliche Daten und/oder wenigstens ein Identifizierungscode der Chipkarte und/oder Konfigurationsparameter gespeichert werden können, wobei die integrierte Schaltung in ein Isoliermaterial (3), das die Karte bildet, eingeschlossen ist, wobei die Karte (1) außerdem Verbindungsmittel (2) umfasst, um mit dem elektronischen Gerät zu kommunizieren, wobei die Verbindungsmittel mit entsprechenden Kontaktflächen der integrierten Schaltung elektrisch verbunden sind, wobei die Chipkarte außerdem eine Sensor-Messschaltung umfasst, um einen physikalischen Parameter zu messen, um wenigstens ein auf den Messwert (S_{D}) des physikalischen Parameters bezogenes Ausgangssignal liefern zu können, wobei die Sensor-Messschaltung in einem starren Gehäuse angeordnet ist, um ein elektronisches Modul (10) zu definieren, das in das Isoliermaterial (3), das die Chipkarte bildet, eingeschlossen ist, wobei die Messschaltung einen Bewegungssensor (C), der in einem ausreichenden Raum innerhalb des Gehäuses aufgenommen ist, um ihm zu ermöglichen, einen Stoß zu detektieren oder eine Beschleunigung zu messen, und eine Sensorschnittstelle, die mit dem Sensor verbunden ist, um ein Messsignal des physikalischen Parameters zu liefern, umfasst, wobei die Messschaltung über das Gehäuse des Moduls mit externen Verbindungsanschlüssen an dem Gehäuse elektrisch verbunden ist und wobei das elektronische Modul über seine externen Verbindungsanschlüsse mit der integrierten Schaltung der Chipkarte elektrisch verbunden ist, wobei das elektronische Modul und die integrierte Schaltung in dem Isoliermaterial der Chipkarte auf einer ersten Fläche einer gedruckten Leiterplatte (14) nebeneinander angeordnet sind,
wobei die Chipkarte (1) dafür ausgelegt ist, auf der Grundlage des Messsignals der Sensorschnittstelle an das tragbare elektronische Gerät direkt oder über die integrierte Schaltung der Karte einen Befehl zu liefern, wobei dieser Befehl auf die detektierte Bewegung bezogen ist, was dem tragbaren elektronischen Gerät ermöglicht, wenigstens eine von dem Anwender im Voraus programmierte Aktion oder Funktion auszuführen, was die Ausführung einer schnellen Steuerung in dem tragbaren elektronischen Gerät ermöglicht.

2. Chipkarte (1) des SIM-Typs nach Anspruch 1, **dadurch gekennzeichnet, dass** die Messschaltung in dem Gehäuse des Moduls der Chipkarte (1) außerdem Mittel zum Vorverarbeiten des über die Sensorschnittstelle gelieferten Messsignals umfasst, derart, dass die Vorverarbeitungsmittel ein Ausgangssignal (S_{D}) liefern, das auf die Messung des Parameters bezogen ist und für die Steuerung einer Aktion oder einer Funktion des elektronischen Geräts genutzt werden kann.

3. Chipkarte (1) des SIM-Typs nach Anspruch 1, **dadurch gekennzeichnet, dass** die Verbindungsmittel der Chipkarte (1) eine drahtlose Verbindungsvorrichtung und/oder eine Zone (2) elektrischer Kontakte, auf die zugegriffen werden kann, auf wenigstens einer Fläche der Karte, die dazu bestimmt sind, mit komplementären Kontaktanschlüssen des elektronischen Geräts, in dem die Chipkarte angeordnet werden kann, in Kontakt zu gelangen, umfassen, wobei die elektrischen Kontakte mit entsprechenden Kontaktbereichen der integrierten Schaltung verbunden sind, und dass die Sensor-Messschaltung (10) zum Messen eines physikalischen Parameters wenigstens ein auf den Messwert (S_{D}) des physikalischen Parameters bezogenes Ausgangssignal über eine elektrische Verbindung durch das Gehäuse des elektronischen Moduls und über die drahtlose Verbindungsvorrichtung und/oder über einen der elektrischen Kontakte (I/O) der Kontaktzone (2) liefern kann.

4. Chipkarte (1) des SIM-Typs nach Anspruch 1, **dadurch gekennzeichnet, dass** die Sensor-Messschaltung der Chipkarte (1) ein dreiachsiger Beschleunigungsmesser ist, der ein mikroelektromechanisches Element enthält, das mit einer Sensorschnittstelle der Messschaltung elektrisch verbunden ist.

5. Chipkarte (1) des SIM-Typs nach Anspruch 1, **dadurch gekennzeichnet, dass** das Gehäuse des elektronischen Moduls der Chipkarte (1) innen einen ausreichenden Raum für den Bewegungssensor und die Sensorschnittstelle der Messschaltung (10) aufweist, um ihm zu ermöglichen, einen Stoß zu detektieren oder eine Beschleunigung zu messen.

6. Chipkarte (1) des SIM-Typs nach Anspruch 1, **dadurch gekennzeichnet, dass** die Sensorschnittstelle der Messschaltung der Chipkarte (1) auf der Basis einer einzigen oder mehrerer Beschleunigungen oder aufeinander folgender Schüttelbewegungen der Chipkarte in einem definierten Zeitraum ausgelegt ist, um ein Signal für die Steuerung der Ausführung einer in dem elektronischen Gerät im Voraus programmierten Aktion oder Funktion zu liefern.

7. Chipkarte (1) des SIM-Typs nach Anspruch 1, **dadurch gekennzeichnet, dass** wenigstens ein dediziertes Register in der Speichereinheit der integrierten Schaltung der Chipkarte (1) dazu vorgesehen ist, das auf die Messung des Parameters der Messschaltung bezogene und durch das Gehäuse des elektronischen Moduls an die integrierte Schaltung gelieferte Ausgangssignal (S_{D}) zu speichern.

8. Chipkarte (1) des SIM-Typs nach einem der vorhergehenden Ansprüche, **dadurch gekennzeichnet, dass** die Messschaltung ohne den Sensor in einer anderen integrierten Schaltung verwirklicht ist und mit dem Bewegungssensor in dem Gehäuse des elektronischen Moduls verbunden ist.

9. Chipkarte (1) des SIM-Typs nach Anspruch 8, **dadurch gekennzeichnet, dass** eine zweite Fläche der gedruckten Leiterplatte (14) der Chipkarte (1) auf einer inneren Fläche eines Verbindungssubstrats (13) montiert ist, dass ein Anschlussrahmen (15) auf der inneren Fläche des Verbindungssubstrats befestigt ist und die gedruckte Leiterplatte (14) umgibt und dass die äußere Fläche des Verbindungssubstrats eine Zone (2) elektrischer Kontakte trägt, auf die zugegriffen werden kann, um einen Kontakt mit komplementären Kontaktanschlüssen des elektronischen Geräts, in dem die Chipkarte angeordnet werden kann, herzustellen, wobei die Kontaktzone mit der ersten integrierten Schaltung und mit dem elektronischen Modul elektrisch verbunden ist.

10. Chipkarte (1) des SIM-Typs nach einem der vorhergehenden Ansprüche, **dadurch gekennzeichnet, dass** die Chipkarte (1) Mittel zur elektrischen Versorgung der Komponenten der Chipkarte umfasst, etwa eine Solarzelle oder einen Akkumulator für elektrische Energie oder eine RFID-Vorrichtung, um Hochfrequenzsignale aufzufangen.

11. Elektronisches System, das eine Chipkarte (1) des SIM-Typs nach einem der vorhergehenden Ansprüche umfasst, die in ein tragbares elektronisches Gerät in Form eines Telefons eingesetzt ist.

## Claims

1. SIM type chip card (1) intended to be inserted inside a portable electronic instrument in the form of a telephone, said chip card including at least one integrated circuit (11) fitted with a memory unit, in which personal data and/or at least one chip card identification code and/or configuration parameters can be stored, wherein said integrated circuit is enclosed in an insulating material (3) forming said card, the card (1) also including connecting means (2) for communicating with the electronic instrument, said connecting means being electrically connected to corresponding contact pads of the integrated circuit, the chip card further including a measuring circuit with a sensor for measuring a physical parameter so as to provide at least one output signal relating to the measurement (S_{D}) of the physical parameter, said measuring circuit with a sensor being arranged in a rigid case to define an electronic module (10), which is enclosed in the insulating material (3) forming said chip card, the measuring circuit including a movement sensor (C), housed in a large enough space inside the case to allow detection of a shock or to measure an acceleration, and a sensor interface connected to the sensor to supply a physical parameter measurement signal, the measuring circuit being electrically connected through the module case to external connection terminals on the case, and the electronic module being electrically connected by its external connection terminals to the integrated circuit of the chip card, the electronic module and the integrated circuit being placed side by side in the insulating material of the chip card on a first surface of a printed circuit board (14), the chip card being adapted to supply a command directly to the portable electronic instrument on the basis of the measurement signal of the sensor interface or via the integrated circuit of the chip card, this command relating to the detected movement allowing the portable electronic instrument to recognize at least one action or function to be performed and pre-programmed by the user in order to allow a rapid command to be performed in the portable electronic instrument.

2. SIM type chip card (1) according to claim 1, **characterized in that** the measuring circuit in the module case also includes means for pre-processing the measurement signal provided by the sensor interface, such that the pre-processing means supply an output signal (S_{D}) relating to the parameter measurement which can be used to control an action or function of the electronic instrument.

3. SIM type chip card (1) according to claim 1, **characterized in that** the connecting means include a wireless connecting device and/or a zone of accessible electric contacts (2) on at least one surface of the card that will come into contact with complementary contact terminals of an electronic instrument in which said chip card can be placed, wherein said electric contacts are electrically connected to corresponding contact pads of the integrated circuit, and **in that** the measuring circuit (10) with a sensor for measuring a physical parameter can supply at least one output signal relating to the measurement (S_{D}) of the physical parameter via an electric connection through the case of the electronic module and via the wireless connecting device and/or via one of the electric contacts (I/O) of the contact zone (2).

4. SIM type chip card (1) according to claim 1, **characterized in that** the measuring circuit with a sensor is a triaxial accelerometer, which includes a micro electro-mechanical element, electrically connected to a sensor interface of the measuring circuit.

5. SIM type chip card (1) according to claim 1, **characterized in that** the case of the electronic module of the chip card (1) includes inside a sufficient space for the movement sensor and the measuring circuit sensor interface (10) to allow said sensor to detect a shock or to measure an acceleration.

6. SIM type chip card (1) according to claim 1, **characterized in that** the sensor interface of the measuring circuit is provided on the basis of a single or several successive accelerations or shocks of said chip card, to supply a signal controlling the execution of a pre-programmed action or function in the electronic instrument.

7. SIM type chip card (1) according to claim 1, **characterized in that** at least one dedicated register in the integrated circuit memory unit is provided for storing the output signal (S_{D}) that relates to the parameter measurement of the measuring circuit and is supplied to the integrated circuit through the case of the electronic module.

8. SIM type chip card (1) according to any of the preceding claims, **characterized in that** the measuring circuit, without the sensor, is made in a second integrated circuit and connected to the movement sensor in the electronic module case.

9. SIM type chip card (1) according to claim 8, **characterized in that** a second surface of the printed circuit board (14) is mounted on an inner surface of a connecting substrate (13), **in that** a connecting frame (15) is secured to the inner surface of the connecting substrate and surrounds the printed circuit board (14), and **in that** the external surface of the connecting substrate has an accessible electric contact zone (2) that comes into contact with complementary contact terminals of an electronic instrument in which said chip card can be placed, wherein the contact zone is electrically connected to the first integrated circuit and to the electronic module.

10. SIM type chip card (1) according to any of the preceding claims, **characterized in that** the chip card (1) includes means for electrically powering the components of the chip card, such as a solar cell or an electric energy accumulator or an RFID device for picking up radiofrequency signals.

11. Electronic system including a SIM type chip card (1) according to any of the preceding claims, inserted in a portable electronic instrument, in the form of a telephone.
